(19) Europäisches Patentamt
European Patent Office
Office européen des brevets

(11) **EP 3 217 755 B1**

(12) **EUROPEAN PATENT SPECIFICATION**

(45) Date of publication and mention
of the grant of the patent:
**03.08.2022  Bulletin 2022/31**

(21) Application number: **15856764.4**

(22) Date of filing: **02.11.2015**

(51) International Patent Classification (IPC):
**H04W 74/08** $^{(2009.01)}$

(52) Cooperative Patent Classification (CPC):
**H04W 74/0833; H04W 74/08**

(86) International application number:
**PCT/CN2015/093572**

(87) International publication number:
**WO 2016/070765 (12.05.2016 Gazette 2016/19)**

(54) **TRANSMISSION RANDOM ACCESS RESPONSE METHODS, AND BASE STATION AND USER EQUIPMENT**

ÜBERTRAGUNG VON DIREKTZUGRIFFSANTWORTVERFAHREN SOWIE BASISSTATION UND BENUTZERGERÄT

PROCÉDÉS DE RÉPONSE D'ACCÈS ALÉATOIRE DE TRANSMISSION, STATION DE BASE ET ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **07.11.2014  CN 201410643906**

(43) Date of publication of application:
**13.09.2017  Bulletin 2017/37**

(73) Proprietor: **Sharp Kabushiki Kaisha
Sakai City, Osaka 590-8522 (JP)**

(72) Inventors:
• **XIAO, Fangying**
**Pudong, Shanghai 201206 (CN)**
• **LIU, Renmao**
**Pudong, Shanghai 201206 (CN)**
• **SHEN, Xingya**
**Pudong, Shanghai 201206 (CN)**

(74) Representative: **Müller Hoffmann & Partner
Patentanwälte mbB
St.-Martin-Strasse 58
81541 München (DE)**

(56) References cited:
EP-A1- 3 047 600     WO-A1-2014/110805
WO-A1-2016/119237     CN-A- 103 582 073
CN-A- 103 747 534

• ERICSSON: "Common control messages for MTC", 3GPP DRAFT; R1-143789 COMMON CONTROL MESSAGES FOR MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 5 October 2014 (2014-10-05), XP050875109, Retrieved from the Internet: URL:http://www.3gpp.org/ftp/Meetings_3GPP_SYNC/RAN1/Docs/ [retrieved on 2014-10-05]
• ALCATEL-LUCENT ET AL: "Feasibility of coverage extension of physical channels for MTC devices", 3GPP DRAFT; R1-130462 - REL-12 MTC COVERAGE - COVERAGE EXT PHY CHANNELS V0.3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG1, no. St Julian; 20130128 - 20130201 19 January 2013 (2013-01-19), XP050663744, Retrieved from the Internet: URL:http://www.3gpp.org/ftp/tsg_ran/WG1_RL1/TSGR1_72/Docs/ [retrieved on 2013-01-19]

EP 3 217 755 B1

- 'Technical Specification Group Radio Access Network; Study on provision of low-cost Machine-Type Communications (MTC) User Equipments (UEs) based on LTE (Release 12' 3GPP TR 36.888 V12.0.0 26 June 2013, XP002749419

**Description**

TECHNICAL FIELD

The present invention relates to the technical field of wireless communications, and more specifically, the present invention relates to a method for sending a random access response by a base station and receiving the random access response by a user, and a base station and user equipment.

BACKGROUND

With the rapid growth of mobile communications and the great progress of technology, the world will move towards a fully interconnected network society where anyone or anything can get information and share data anytime and anywhere. It is estimated that there will be 50 billion interconnected devices by 2020, where only about 10 billion may be mobile phones and tablet computers, while the others are not machines having a dialogue with people, but rather machines having a dialogue with each other. Therefore, how to design a system to support a large number of machine communication devices is a subject needing an in-depth study.

In the standard of Long Term Evolution (Long Term Evolution, LTE) of the Third Generation Partnership Project (3GPP), machine-to-machine communication is called machine type communication (Machine Type Communication, MTC). The MTC is a data communication service without human involvement. A large-scale deployment of MTC user equipment can be used in various fields such as security, tracking, billing, measurement and consumer electronics, and specifically related applications include video surveillance, supply chain tracking, intelligent meter reading, remote monitoring and the like. User equipment (MTC equipment) supporting the MTC requires lower power consumption, and supports a relatively low data transmission rate and lower mobility. The current LTE system is mainly for human-to-human communication services. The key to achieving competitive advantages of scale and application prospects of MTC services is that the LTE network supports low-cost MTC equipment.

In addition, some MTC equipment needs to be installed in basements of residential buildings or positions protected by insulating foils, metal windows or thick walls of traditional buildings. Compared with conventional terminal equipment (such as mobile phones and tablet computers) in the LTE network, such MTC equipment will suffer more severe penetration losses in air interface. The 3GPP decides to study the project design and performance evaluation for MTC equipment with additional 15 dB coverage enhancement. It should be noted that MTC equipment located at an area with poor network coverage has the following characteristics: extremely low data transmission rates, very loose delay requirements, and limited mobilities. In view of the above characteristics of MTC, some signaling and/or channels of the LTE network can be further optimized to better support MTC services.

Therefore, at the 3GPP RAN # 64 plenary session held in June 2014, a new work project for Rel-13 with low complexity and enhanced coverage MTC has been proposed (see non-patent literature: RP-140990 New work Item on Even Lower Complexity and Enhanced Coverage LTE UE for MTC, Ericsson, NSN). In the description of this work project, the LTERel-13 system needs to allow MTC user equipment (User Equipment, UE, hereinafter referred to as narrowband MTC UE) supporting 1.4 MHz radio-frequency bandwidth in uplink and downlink to operate at any system bandwidth (for example, 1.4 MHz, 3 MHz, 5 MHz, 10 MHz, 15 MHz, and 20 MHz), and provide coverage enhancement functions for such MTC users. In the system design, a unified design is required for both low-cost MTC users and coverage-enhanced MTC users.

In an existing LTE system, when detecting a preamble sent by UE, an eNB will send a random access response (Random Access Response, RAR) message on a physical downlink shared channel (Physical Downlink shared Channel, PDSCH). The eNB multiplexes RAR messages of multiple UEs received at the same time-frequency location (referred to as MACRAR) to one MAC PDU. The RAR message of each UE contains a detected preamble identifier, timing advance command for uplink synchronization, an initial uplink grant (for sending subsequent msg3), and a temporary cell-radio network temporary identifier (Cell-Radio Network Temporary Identifier, C-RNTI).

After sending the preamble, the UE needs to use a random access-radio network temporary identifier (Random Access-Radio Network Temporary Identifier, RA-RNTI) to monitor a physical downlink control channel (physical Downlink Control Channel, PDCCH) to receive an RAR message. RA-RNTI corresponds one to one with the time-frequency location where the UE sends the preamble. The UE and eNB can calculate an RA-RNTI value corresponding to the preamble, respectively. An RAR window starts from a subframe at which the UE sended the preamble plus 3 subframes, and has a length of ra-Response window size. It is considered that the random access is failed if the UE does not receive an RAR replied to the UE in the RAR window. In the RAR message, there may also be a backoff indication indicating a waiting time range for the UE to retransmit the preamble. If a random access is failed, the UE needs to delay for a period of time before proceeding to the next preamble transmission. The delayed time range is indicated by backoffindicator. The UE may take a value randomly between 0 and backoffindicator, so that a probability of UEs in a collision sending the preamble again at the same time can be reduced.

For a coverage-enhanced MTC UE, it is necessary to use an enhancement technique to improve a received signal strength of an MTC UE physical channel (including PDSCH, PUSCH, PDCCH, PUCCH, PRACH, etc.). In the discussion of Rel-12 MTC, a received signal strength of an MTC physical channel is mainly enhanced by means of subframe bundling (TTI bundling) or repetitive transmission. MTC UEs in different geographical locations require different coverage enhancement degrees, the MTC UEs of the same cell can be divided into multiple different coverage enhancement levels, and the number of repetitive transmissions required for different coverage enhancement levels or the number of subframes included in the subframe bundling or the number of physical resource blocks are not the same. A repetition level may also be used to represent a enhanced coverage level. For example, PRACH of the coverage-enhanced MTC UE may be divided into four repetition levels (0, 1, 2, 3), which are corresponding to enhanced coverage levels: 0 dB, 5 dB, 10 dB, and 15 dB, respectively.

Compared with the existing LTE system, for the Rel-13 LTE system that supports coverage-enhanced MTC, PDCCHs that are scrambled with RA-RNTIs and preamble identifiers cannot distinguish between RAR messages of different repetition levels. Moreover, when a bandwidth is greater than 1.4 MHZ, the MTC UE with low complexity cannot receive the PDCCHs occupying a full bandwidth. Therefore, for user equipment of MTC type with low complexity and coverage enhancement, a new solution is required to transmit an RAR message of MTC UE with low complexity and coverage enhancement.

ERICSSON: "Common control messages for MTC", 3GPP DRAFT; R1-143789 COMMON CONTROL MESSAGES FOR MTC, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Lubljana, Slovenia; 20141006-20141010 5 October 2014 (2014-10-05), XP050875109, discusses the feasibility of using EPDCCH and PDSCH/PUSCH transmission not only for unicast data transmission but also for tansmission of higher layer control messages such as system information blocks (SIB), random access responses (RAR) and paging requests and the special requirements that these higher layer control messages may pose on the physical layer solution.

WO 2016/119237 is prior art in the sense of Article 54(3) EPC and relates to systems, methods, apparatuses, and computer program products of PRACH selection and random access response (RAR) detection. One method includes specifying, by a network node, a starting point for preamble repetition having a repetition level such that all user equipment (UEs) of the same repetition level start the preamble repetition on a same physical random access channel (PRACH) resource, determining when a series of the preamble repetition is over, and transmitting a random access response (RAR) when the repetition series is finished.

SUMMARY

The invention is defined by the appended claims. References to embodiments which do not fall under the scope of the claims are to be understood as examples useful for understanding the invention.

To solve the above-mentioned problem, a first aspect of the present disclosure provides a method performed by a base station (900), comprising:receiving a preamble based on at least a repetition level;transmitting, using a Physical Resource Block, PRB, set determined based on the repetition level, a Random Access Response, RAR, message.

A second aspect of the present disclosure provides a method performed by a user equipment, UE (1000), comprising:sending a preamble based on at least a repetition level;determining a Physical Resource Block, PRB, set based on the repetition level;receiving a Random Access Response, RAR, message using the PRB set.

A third aspect of the present disclosure provides a base station (900), comprising:a receiving unit (910), configured to receive a preamble based on at least a repetition level;a transmitting unit (930), configured to transmit, using a Physical Resource Block, PRB, set determined based on the repetition level, a Random Access Response, RAR, message.

A fourth aspect of the present disclosure provides a user equipment, UE (1000), comprising:a sending unit (1010), configured to send a preamble based on at least a repetition level;a receiving unit (1020), configured to determine a Physical Resource Block, PRB, set based on the repetition level, wherein the receiving unit (1020) receives a Random Access Response, RAR, message using the PRB set.

BRIEF DESCRIPTION OF THE DRAWINGS

The above and other features of the present invention will become more apparent from the following detailed description in conjunction with the accompanying drawings, wherein:

Fig. 1 shows a flow diagram of a method for sending a random access response (RAR) message.
Fig. 2 shows a flow diagram of a method for receiving a random access response (RAR) message.
Fig. 3 shows a relationship with a downlink system bandwidth.
Fig. 4 shows RB starts of RAR messages with different repetition levels.

Fig. 5 shows a schematic diagram of resource blocks with the same size occupied by RAR messages with different repetition levels.

Fig. 6 shows the sizes of resource block sets occupied by RAR messages with different repetition levels.

Fig. 7 shows initial resource block sets corresponding to resource block sets with different sizes.

Fig. 8 shows a schematic diagram of resource blocks with different sizes occupied by RAR messages with different repetition levels.

Fig. 9 shows a block diagram of a base station.

Fig. 10 shows a block diagram of user equipment.

## DETAILED DESCRIPTION

The following describes the present invention in detail with reference to the accompanying drawings and specific embodiments. It should be noted that the present invention is not limited to the specific embodiments described hereinafter. In addition, for simplicity, a detailed description of the known art not directly related to the present invention is omitted to prevent confusion with the understanding of the present invention.

Embodiments according to the present invention are described in detail below by using an LTE mobile communication system and its subsequent evolved version as an exemplary application environment. However, it should be noted that the present invention is not limited to the following embodiments, but is applicable to other wireless communications systems, such as a future SG cellular communications system.

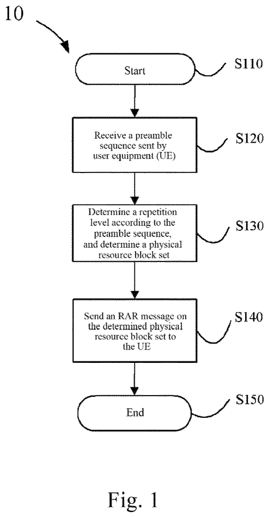

Fig. 1 shows a flow diagram of a method for sending a random access response (RAR) message.

As shown in Fig. 1, a method 10 starts with step 5110.

At step S120, a preamble sent by user equipment UE is received.

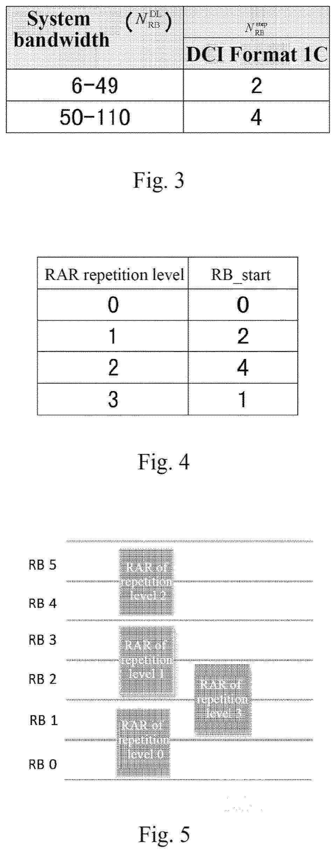

At step S130, a repetition level is determined according to the preamble, and, according to the repetition level, a physical resource block set used for sending the RAR message is determined. The step is described in detail below with reference to Figs. 3-8.

### Size of RAR Message

Since an MAC PDU corresponding to an RAR message is at least 56 bits (excluding a backoff indication) or 64 bits (including a backoff indication), the RAR message contains an MAC RAR of only one UE. A base station (eNB) can carry MAC RARs of one or more UEs in an RAR message. For example, a UE may be informed of the number of MAC RARs carried in an RAR message in a predefined manner or a network configuration manner. The network configuration in the present invention includes, but is not limited to, system information, RRC signaling, and the like. Alternatively, the eNB may inform the UE of the number of the MAC RARs carried in the RAR message through a field called RAR_number. In addition, the eNB may inform, in a system information, the UE of the maximum number of the MAC RARs that may be carried in the RAR message through a field called RAR_MAX_number.

Alternatively, the eNB may also carry in a fixed RAR message in the protocol one or y (y>1) MAC RARs, and meanwhile, the eNB informs, through a field called RAR_UE_specific, the UE of which manner is used to send an RAR message to the UE. For example, RAR_UE_specific =0 indicates that an RAR message carries one MAC RAR; and RAR_UE_speoific =1 indicates that an RAR message carries y MAC RARs. If there are no y MAC RARs required to be sent when the eNB sends an RAR message, the number of bits required by the y MAC RARs may be achieved in a filling manner or by means of repeating some MAC RARs.

In addition, whether a backoff indication is contained in the RAR message may also be determined in a predefined manner or a network configuration manner.

### Time Location of Transmitting RAR Message

A time location of transmitting an RAR message may be determined by an RAR window. A start subframe of an RAR window of the UE receiving RAR message(s) based on corresponding repetition level(s) after the UE sends a preamble based on a repetition level(s) is determined in a predefined manner or network configuration manner, and sizes of RAR windows corresponding to RAR messages with different repetition levels are determined in a predefined manner or a network configuration manner.

### Frequency Location of Transmitting RAR Message

The base station maps RAR messages based on different repetition levels to different resource block (RB) sets, wherein the resource block set refers to resource blocks occupied by an RAR message in a subframe, and the size of the resource block set refers to the number of resource blocks occupied by an RAR message in a subframe. The RAR message may occupy multiple subframes, and the numbers of subframes occupied by RAR messages based on different repetition levels may be different. Based on whether the RAR messages based on different repetition levels are mapped to resource block sets of the same size, the present invention provides two implementation solutions: in solution A, the RAR messages based on different repetition levels are mapped to resource block sets of the same size, and in solution B, the RAR messages based on different repetition levels are mapped to resource block sets of different sizes. The eNB and the UE can support the two manners simultaneously or support only one of them. Whether to support solution A or solution B may be determined in a predefined manner or a network configuration manner. In addition, the resource block sets in the present invention may be physical resource block (PRB) sets, or may be virtual resource block (VRB) sets, and there is a mapping relationship between a virtual resource block and a physical resource block (refer to 3GPP TS36.211 for details).

It is assumed that the value of repetition level of an RAR message is m, and the size of each RB set is n. The size of an RB set may be informed to a UE in a predefined manner or a network configuration manner. The eNB may map RAR messages based on different repetition levels to different RB sets of the same frequency band with a bandwidth no more than 1.4 MHZ, and the different RB sets are identified through a serial number, where the serial number can serve as the start serial number RB_start of the RB sets used for sending the RAR messages with different repetition levels (solution A1), or the RAR messages based on different repetition levels are mapped to different frequency bands with a bandwidth no more than 1.4 MHZ (solution A2). The eNB and the UE can support the two manners simultaneously or support only one of them. Whether solution A1 or solution A2 is selected in a certain communication may be determined in a predefined manner or a network configuration manner.

That the eNB maps RAR messages based on different repetition levels to different RB resource sets of the same frequency band F with a bandwidth no more than 1.4 MHZ includes the following operations:

-- Selecting a frequency band F with a bandwidth no more than 1.4 MHZ from the entire system bandwidth, where the selected frequency band F and the size of the frequency band F may be informed to the UE in a predefined manner or a network configuration manner. This operation can be omitted if the system bandwidth is 1.4 MHZ and all RAR messages based on different repetition levels are mapped to the entire system bandwidth.

-- Determining m RB_starts in the selected frequency band F of the bandwidth no more than 1.4 MHZ. A value of an RB_start may be informed to the UE in a predefined manner or a network configuration manner.

-- Mapping RAR messages based on different repetition levels to different RB_starts, respectively. In a frequency domain, the RAR messages based on different repetition levels occupy n RB resources from RB_start to RB_start+n-1. A mapping relationship between the RAR messages based on different repetition levels and RB_starts may be informed to the UE in a predefined manner or network configuration, so that the UE can receive the RAR message according to the same mapping relationship.

For example, in the existing LTE system, the RAR message employs PDCCH DCI format 1C. According to the 3GPP TS36.213, an RB_start used for sending an RAR message may be any one of

$$RB_{start} = \{0, \quad N_{RB}^{step}, \quad 2N_{RB}^{step}, \ldots, \quad (\lfloor N_{VRB}^{DL} / N_{RB}^{step} \rfloor - 1)N_{RB}^{step} \},$$

and for a value of

$$N_{RB}^{step},$$

refer to Fig. 3. In Fig. 3,

$$N_{RB}^{DL}$$

represents a system bandwidth (represented by RB), and different system bandwidths correspond to different values

$$N_{RB}^{step}.$$

A size L_CRBs of an RB set occupied by an RAR message may be any one of

$$L_{CRBs} = \{ \ N_{RB}^{step}, \quad 2N_{RB}^{step}, \ldots, \quad \lfloor N_{VRB}^{DL} / N_{RB}^{step} \rfloor \cdot N_{RB}^{step} \},$$

where

$$N_{VRB}^{DL}$$

represents the number of virtual resource blocks when a system bandwidth is

$$N_{RB}^{DL},$$

and a mapping relationship between

$$N_{VRB}^{DL}$$

and

$$N_{RB}^{DL}$$

can be found in the 3GPP TS36.211. When the system bandwidth is 1.4 MHZ (that is, 6 RBs), $RB_{start}$ = {0, 2, 4} and $L_{CRBs}$ = {2, 4, 6}. For a system supporting low complexity and (or) enhanced coverage MTC, assuming that $RB_{start}$ and $L_{CRBs}$ are still based on the foregoing definition, a mapping relationship between the RAR messages based on different repetition levels and $RB_{start}$ needs to be defined. It is assumed that there are four RAR repetition levels, that is {0, 1, 2, 3}. Since it must be ensured that the RAR messages based on different repetition levels are mapped to different RBstart, a new RBstart needs to be defined. It is assumed that $RB_{start}$ = {0, 1, 2, 4} and L_CRBs = 2, a mapping relationship between repetition levels of RARs and $RB_{start}$ may be defined, as shown in Fig. 4. Therefore, RB sets occupied by RARs based on different repetition levels can be obtained, as shown in Fig. 5.

That the eNB maps RAR messages based on different repetition levels to different frequency bands F with a bandwidth no more than 1.4 MHZ includes the following operations:

-- Selecting m frequency bands F with a bandwidth f from the entire system bandwidth, that is, determining m RB_starts. The value of an RB_start may be informed to the UE in a predefined manner or a network configuration manner.
-- Mapping RARs based on different repetition levels to different RB_starts, respectively. A mapping relationship between the RAR messages based on different repetition levels and RB_starts may be informed to the UE in a predefined manner or network configuration, so that the UE can receive the RAR message according to the same mapping relationship.

Alternatively, the eNB can determine, according to the following formula, that RB_start of an RAR message based on a repetition level i is one of the set RB_start_set = {RB_index, where the RB_index meets that the number of repetition levels of (RB_index + offset) mod RAR messages = the repetition level i of the RAR message, and RB_index ∈ {0, n, 2n,..., kn}, kn < a system bandwidth, offset ≥ 0}. If the number of elements in the set RB_start set is greater than 1, the ath element (a = the number of elements in RA-RNTI mod the set RB_start_set) in the set RB_start set may be used as the RB_start in a predefined manner or a network configuration manner.

Alternatively, the entire system bandwidth can be divided into several subbands with the same size (also referred to as RB groups) (for example, the RB groups can be obtained in a manner provided in the proposal R1-143788 at the 3GPP RANI 78bis session), and each RB group corresponds to a number RB_group_index starting from 0. At this time, the serial number RB_start of the RB sets is the number RB_group_index of the RB groups. Thus, the eNB can determine, according to the following formula, that RB_start of an RAR message based on a repetition level i is one of the set RB_start_set = {RB_group_index, the number of repetition levels of (RB_group_index+offset) mod RAR messages = the repetition level i of the RAR message, offset ≥ 0}. RB_group_index does not contain an RB group with a bandwidth not satisfying the requirement. For example, a bandwidth of 100 MHZ is divided into an RB group with 6 RBs, and there are less than 6 RBs for the remaining subbands, so that RAR messages will not be transmitted on an RB group having RBs less than 6. If the number of elements in the RB_start_set is greater than 1, the bth element (b = the number of elements in the RA-RNTI mod RB_start set) in the set RB_start_set may be used as the RB_start in a predefined manner or a network configuration manner.

It is assumed that the number of repetition levels of RAR messages is m, and the sizes of RB sets occupied by RAR messages based on repetition levels 1,2,..., m are $n_1, n_2,..., n_m$. Sizes of RB sets occupied by the RAR messages based on different repetition levels may be informed to the UE in a predefined manner or a network configuration manner. Similarly, the eNB may map the RAR messages based on different repetition levels to RB sets with different sizes of the same frequency band with a bandwidth no more than 1.4 MHZ (Solution B1), or map the RAR messages based on different repetition levels to RB sets with different sizes of different frequency bands with a bandwidth no more than 1.4 MHZ (Solution B2). The eNB and the UE can support the two manners simultaneously or support only one of them. Whether solution B1 or solution B2 is selected in a certain communication may be determined in a predefined manner or a network configuration manner.

The eNB maps the RAR messages based on different repetition levels to RB sets with different sizes of the same frequency band F with a bandwidth no more than 1.4 MHZ, and a mapping relationship between the RAR messages based on different repetition levels and the RB sets with different sizes may be predefined or configured through network. Solution B1 includes the following operations:

-- Selecting a frequency band F with a bandwidth no more than 1.4 MHz from the entire system bandwidth, where the selected frequency band F and the size of the frequency band F may be informed to the UE in a predefined manner or a network configuration manner. This operation can be omitted if the system bandwidth is 1.4 MHZ and all RAR messages based on different repetition levels are mapped to the entire system bandwidth.

-- Determining m RB_starts in the selected frequency band F of the bandwidth no more than 1.4 MHz. The value of RB_start and the size of a corresponding RB set thereof may be informed to the UE in a predefined manner or a network configuration manner, so that the UE can receive an RAR message according to the same mapping relationship.

-- Mapping the RAR messages based on different repetition levels to different RB_starts respectively according to the sizes of the RB sets occupied by the RAR messages based on different repetition levels, and a mapping relationship between the sizes of RBs and RB_starts. For example, in the existing LTE system, the RAR employs PDCCH DCI format 1C, and according to the 3GPP TS36.213, RB_start used for sending the RAR is one of the set

$$RB_{start} = \{0, \ N_{RB}^{step}, \ 2N_{RB}^{step},..., \ (\lfloor N_{VRB}^{DL} / N_{RB}^{step} \rfloor - 1)N_{RB}^{step}\}$$ The size of the RB set is one of set

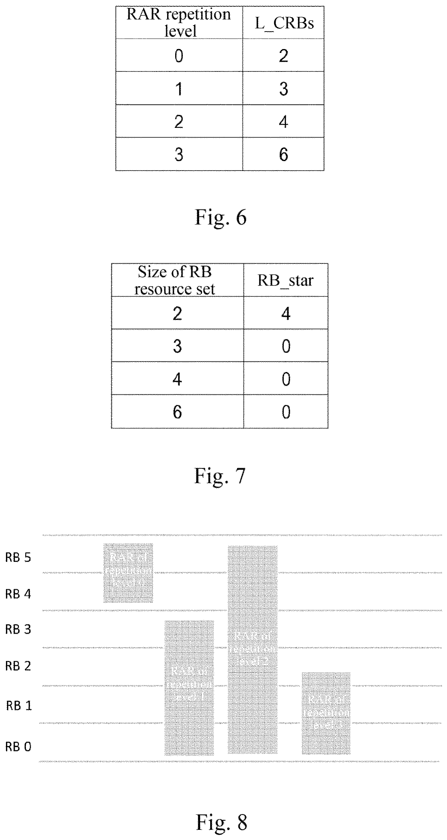

$$L_{CRBs} = \{N_{RB}^{step}, \ 2N_{RB}^{step},..., \ \lfloor N_{VRB}^{DL} / N_{RB}^{step} \rfloor \cdot N_{RB}^{step}\}$$. When the system bandwidth is 1.4 MHz (that is, 6 RBs), $RB_{start}$ = {0, 2, 4} and $L_{CRBs}$ = {2, 4, 6}. For a system supporting low complexity and (or) enhanced coverage MTC, assuming that $RB_{start}$ and $L_{CRBs}$ are still based on the foregoing definition, a mapping relationship between the repetition levels of RARs and $L_{CRBs}$ needs to be defined. It is assumed that there are four RAR repetition levels, that is {0, 1, 2, 3}. Since it must be ensured that the RARs based on different repetition levels are mapped to different $L_{CRBs}$ a new $L_{CRBs}$ needs to be defined, and it is assumed that $L_{CRBs}$ = {2, 3, 4, 6}. A mapping relationship between repetition levels of RARs and $L_{CRBs}$ may be defined, as shown in Fig. 6, and a mapping relationship between $L_{CRBs}$ and $RB_{start}$ is shown in Fig. 7. Therefore, RB sets occupied by RARs based on different repetition levels are shown in Fig. 8.

The eNB maps the RAR messages based on different repetition levels to RB sets with different sizes of the same frequency band F with a bandwidth no more than 1.4 MHZ, and a mapping relationship between the RAR messages based on different repetition levels and the RB sets with different sizes may be predefined or configured through network.

Solution B2 includes the following operations:

-- Selecting m frequency bands F1, F2, ..., Fm with the same bandwidth or different bandwidths from the entire system bandwidth. The selected m frequency bands F1, F2, ..., Fm with the same bandwidth or different bandwidths may be informed to the UE in a predefined manner or a network configuration network, so that the UE can receive an RAR message according to the same mapping relationship.

-- Selecting an RB_start from each of m frequency bands F1, F2, ..., Fm with the same bandwidth or different bandwidths, respectively. RB_starts of different frequency bands may be informed to the UE in a predefined manner or a network configuration manner.

-- Mapping RAR messages based on different repetition levels to RB_starts of m frequency bands F1, F2, ..., Fm with the same bandwidth or different bandwidths. It is assumed that Fi corresponds to RB_start_i (i = 1, 2,..., m), and a frequency band Fj to which an RAR message based on a repetition level k is mapped meets that RB_start_j

+ $n_k$-1 is still within the range of Fj. A mapping relationship between the RAR messages based on different repetition levels and RBstarts of different frequency bands may be predefined or configured through network.

## Repetition levels of RAR messages

Before sending an RAR message, the eNB needs to determine a repetition level of the RAR message. If a preamble based on a specified repetition level can be sent only on a specified PRACH resource, the base station (eNB) also determines the repetition level of the preamble according to a PRACH resource at which the received preamble is transmitted, so as to determine the repetition level of the RAR message according to a mapping relationship between the repetition level of the preamble and the RAR message. Therefore, a corresponding relationship between a PRACH resource and a repetition level of a preamble and a corresponding relationship between a repetition level of an RAR message and a repetition level of a preamble and/(or) a PRACH resource is determined in a predefined manner or a network configuration manner. For example, a repetition level of an RAR message corresponding to a preamble received on a PRACH resource corresponding to subframe 1 is 0, or a repetition level of a message corresponding to a received preamble based on a repetition level 0 is 0. In addition, if a preamble belonging to a specified preamble group can be sent only using a specified repetition level, the eNB determines (according to a repetition level of a preamble group which the preamble belongs to) the repetition level of the preamble from the received preamble. Then a repetition level of an RAR message can be determined according to a mapping relationship between the repetition level of the preamble or the preamble group and the RAR message. Therefore, a corresponding relationship between a repetition level of an RAR message and a repetition level of a preamble (or a preamble group) is determined in a predefined manner or a network configuration manner.

Likewise, after sending a specified preamble, the UE can determine a repetition level of a to be received RAR message according to a predefined or network-configured mapping relationship between a repetition level of an RAR message and a repetition level of a PRACH resource, or a repetition level of an RAR message and a repetition level of a preamble (or a preamble group).

Now referring back to Fig. 1, at step S140, the RAR message is sent on the determined physical resource block set to the UE. Finally, the method 10 ends at step S150.

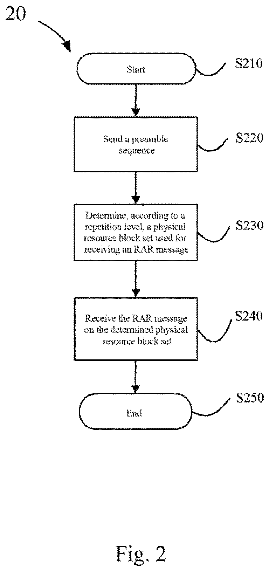

Fig. 2 shows a flow diagram of a method for receiving a random access response (RAR) message.

As shown in Fig. 2, a method 20 starts with step S210.

At step S220, a UE sends a preamble.

At step S230, the UE determines, according to a repetition level, a physical resource block set used for receiving the RAR message. For example, a specified bandwidth, the size of a resource block set, or the start position of a resource block set may be determined in a predefined manner or a network configuration manner. Preferably, a start subframe of an RAR window of the UE receiving RAR message based on corresponding repetition level after the UE sends preamble based on different repetition level is determined in a predefined manner or a network configuration manner, and sizes of RAR windows corresponding to RAR messages based on different repetition level are determined in a predefined manner or a network configuration manner.

Alternatively, RAR messages based on different repetition levels are mapped to different resource block sets of the same frequency band with a specified bandwidth, or RAR messages based on different repetition levels are mapped to resource block sets of different frequency bands with a specified bandwidth, where the resource block sets have the same size. Alternatively, RAR messages based on different repetition levels are mapped to different resource block sets of the same frequency band with a specified bandwidth, or RAR messages based on different repetition levels are mapped to resource block sets of different frequency bands with a specified bandwidth, where the resource block sets have different sizes.

At step S240, the RAR message is received on the determined physical resource block set. A repetition level of an RAR message is determined according to a repetition level of a preamble, where the repetition level of the preamble is determined according to a PRACH resource on which the preamble transmitted or according to a repetition level of a preamble group which the preamble belongs to. The UE receives the RAR message on the resource block set corresponding to the RAR message based on the repetition level. Finally, the method 20 ends at step S250.

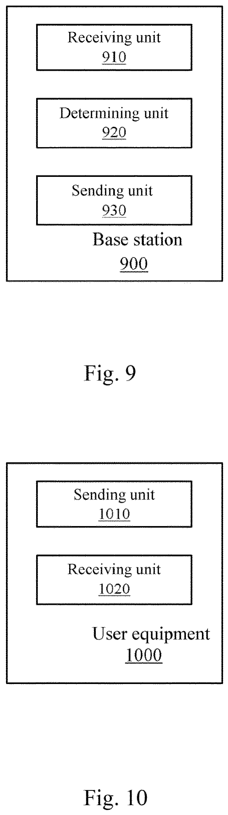

Fig. 9 shows a block diagram of a base station. Those skilled in the art may understand that various operations described above with respect to Fig. 1 can be implemented through the base station shown in Fig. 9. For simplicity, all details described above with respect to Fig. 1 are not repeated in the following descriptions.

As shown in Fig. 9, a base station 900 includes a receiving unit 910, a determining unit 920, and a sending unit 930. The receiving unit 910 is configured to receive a preamble sent by user equipment. The determining unit 920 is configured to determine a repetition level according to the preamble, and determine, according to the repetition level, a physical resource block set used for sending an RAR message. The sending unit 930 is configured to send the RAR message on the determined physical resource block set to the UE.

Preferably, the determining unit 920 determines the size of the RAR message in a predefined manner or a network configuration manner. Herein, the size of the RAR message is the number of MAC RARs contained in the RAR message. More preferably, the determining unit 920 indicates the number of MAC RARs carried in the RAR message through an RAR_number field in a system information, and/or indicates the maximum number of MAC RARs carried in the RAR message through an RAR_MAX_number field in a system information. In addition, the determining unit 920 may determine whether a backoff indication is contained in the RAR message in a predefined manner or a network configuration manner.

In addition, the determining unit 920 may determine, in a predefined manner or a network configuration manner, a start subframe of an RAR window of the UE receiving RAR messages with corresponding repetition levels after the UE sends preambles based on different repetition levels, and determine, in a predefined manner or a network configuration manner, sizes of RAR windows corresponding to RAR messages based on different repetition levels.

Preferably, the determining unit 920 may map RAR messages based on different repetition levels to resource block sets of the same size, or map RAR messages based on different repetition levels to resource block sets of different sizes. Alternatively, the determining unit 920 may map RAR messages based on different repetition levels to different resource block sets of the same frequency band with a specified bandwidth, or map RAR messages based on different repetition levels to resource block sets of different frequency bands with a specified bandwidth, where the resource block sets have the same size. Alternatively, the determining unit 920 may map RAR messages based on different repetition levels to different resource block sets of the same frequency band with a specified bandwidth, or map RAR messages based on different repetition levels to resource block sets of different frequency bands with a specified bandwidth, where the resource block sets have different sizes.

In addition, the determining unit 920 may determine, in a predefined manner or a network configuration manner, the specified bandwidth, the size of a resource block set, or the start position of a resource block set.

Moreover, the repetition level may be determined by a preamble group selected by the UE, and the RAR message corresponds to a preamble in the preamble group. Alternatively, the repetition level is determined by a PRACH resource selected by the UE for transmitting the preamble, and the RAR message corresponds to a preamble transmitted on the PRACH resource.

Alternatively, a serial number of the physical resource block set serves as the start serial number of a physical resource block.

In addition, the repetition level may determine the numbers of repetition of PDSCH, PUSCH, PDCCH, PUCCH and PRACH. Alternatively, the repetition level may determine subframe bundling sizes of PDSCH, PUSCH, PDCCH, PUCCH and PRACH.

Fig. 10 shows a block diagram of user equipment.

Those skilled in the art may understand that various operations described above with respect to Fig. 2 can be implemented through the user equipment shown in Fig. 10. For simplicity, all details described above with respect to Fig. 2 are not repeated in the following descriptions.

As shown in Fig. 10, user equipment 1000 includes a sending unit 1010 and a receiving unit 1020. The sending unit 1010 is configured to send a preamble, and the receiving unit 1020 is configured to determine, according to a repetition level, a physical resource block set used for receiving an RAR message, and receive the RAR message on the determined physical resource block set.

Preferably, a start subframe of an RAR window of the UE receiving RAR messages based on corresponding repetition levels after the UE sends preambles based on different repetition levels is determined in a predefined manner or a network configuration manner, and sizes of RAR windows corresponding to RAR messages based on different repetition levels are determined in a predefined manner or a network configuration manner.

Preferably, RAR messages based on different repetition levels are mapped to different resource block sets of the same frequency band with a specified bandwidth, or RAR messages based on different repetition levels are mapped to resource block sets of different frequency bands with a specified bandwidth, where the resource block sets have the same size. Alternatively, RAR messages based on different repetition levels are mapped to different resource block sets of the same frequency band with a specified bandwidth, or RAR messages based on different repetition levels are mapped to resource block sets of different frequency bands with a specified bandwidth, where the resource block sets have different sizes.

In addition, the receiving unit 1020 may receive, in a predefined manner or a network configuration manner, information related to the specified bandwidth, the size of a resource block set, or the start position of a resource block set.

It should be stated that, to reach coverage enhancement with a specified level, a coverage enhancement technique applicable is repeated sending, subframe bundling, repeated sending under subframe bundling and the like. It should be understood that the above-mentioned embodiments of the present invention can be realized in the form of software, hardware or a combination of hardware and software. For example, various internal components of the base station and user equipment in the above embodiments can be realized through multiple devices, and these devices including, but not limited to: an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

Moreover, the embodiments of the present invention disclosed herein may be implemented on a computer program product. More specifically, the computer program product is the following product that has a computer-readable medium encoded with a computer program logic. When executed on a computing device, the computer program logic provides associated operations to achieve the above-described technical solutions in the present invention. When executed on at least one processor of a computing system, the computer program logic enables the processor to execute the operations (methods) described in the embodiments of the present invention. Such arrangements of the present invention are typically provided as software, code and/or other data structures arranged or encoded on a computer readable medium such as an optical medium (for example, CD-ROM), floppy or hard disk, or as other medium such as firmware or microcode in one or more ROM or RAM or PROM chips, or as downloadable software images in one or more modules, shared databases and the like. The software or firmware or such configurations can be installed onto a computing device to cause one or more processors in the computing device to perform the technical solutions described in the embodiments of the present invention.

**Claims**

1. A method performed by a base station (900), comprising:

   receiving a preamble based on at least a repetition level;
   transmitting, using a Physical Resource Block, PRB, set determined based on the repetition level, a Random Access Response, RAR, message.

2. The method according claim 1, wherein
   the RAR message is transmitted using the PRB set and a RAR window determined based on the repetition level.

3. A method performed by a user equipment, UE (1000), comprising:

   sending a preamble based on at least a repetition level;
   determining a Physical Resource Block, PRB, set based on the repetition level;
   receiving a Random Access Response, RAR, message using the PRB set.

4. The method according to claim 3, wherein:
   the PRB set used to receive the RAR message is configured by system information.

5. The method according to claim 3, wherein:

   a RAR window is determined along with the PRB set based on the repetition level, and
   the RAR message is received using the PRB set and the RAR window.

6. A base station (900), comprising:

   a receiving unit (910), configured to receive a preamble based on at least a repetition level;
   a transmitting unit (930), configured to transmit, using a Physical Resource Block, PRB, set determined based on the repetition level, a Random Access Response, RAR, message.

7. The base station (900) according to claim 6, wherein:
   the PRB set used to receive the RAR message is configured by system information.

8. The base station (900) according to claim 6 or 7, wherein:
   the PRB set contains 6 consecutive physical resource blocks.

9. The base station (900) according to claim 6, wherein:
   the transmitting unit (930) is configured to transmit the system information which contains information which is used to determine the number of repetitions for the RAR message.

10. The base station (900) according to claim 6, wherein:
    the transmitting unit (930) transmits, using the PRB set and a RAR window determined based on the repetition level, the RAR message.

11. A user equipment, UE (1000), comprising:

a sending unit (1010), configured to send a preamble based on at least a repetition level;
a receiving unit (1020), configured to determine a Physical Resource Block, PRB, set based on the repetition level, wherein
the receiving unit (1020) receives a Random Access Response, RAR, message using the PRB set.

12. The user equipment (1000) according to claim 11, wherein:
the PRB set used to receive the RAR message is configured by system information.

13. The user equipment (1000) according to claim 11 or 12, wherein:
the PRB set contains 6 consecutive physical resource blocks.

14. The user equipment (1000) according to claim 11, wherein:
the receiving unit (1020) is configured to receive the system information which contains information which is used to determine the number of repetitions for the RAR message.

15. The user equipment (1000) according to claim 11, wherein
the receiving unit (1020) determines the PRB set and a RAR window based on the repetition level and receives the RAR message using the PRB set and the RAR window.

**Patentansprüche**

1. Verfahren, das von einer Basisstation (900) durchgeführt wird, aufweisend:

Empfangen einer Präambel basierend auf zumindest einem Wiederholungsniveau;
Übertragen einer Direktzugriffsantwort-, RAR-, Nachricht unter Verwendung eines Satzes physikalischer Ressourcenblöcke, PRB, der basierend auf dem Wiederholungsniveau bestimmt wird.

2. Verfahren nach Anspruch 1, wobei:
die RAR-Nachricht unter Verwendung des PRB-Satzes und eines RAR-Fensters übertragen wird, die basierend auf dem Wiederholungsniveau bestimmt werden.

3. Verfahren, das von einem Nutzerendgerät, UE (1000), durchgeführt wird, aufweisend:

Senden einer Präambel basierend auf zumindest einem Wiederholungsniveau;
Bestimmen eines Satzes physikalischer Ressourcenblöcke, PRB, basierend auf dem Wiederholungsniveau;
Empfangen einer Direktzugriffsantwort, RAR-, Nachricht unter Verwendung des PRB-Satzes.

4. Verfahren nach Anspruch 3, wobei:
der PRB-Satz, der verwendet wird, um die RAR-Nachricht zu empfangen, mittels einer Systeminformation konfiguriert wird.

5. Verfahren nach Anspruch 3, wobei:

ein RAR-Fenster zusammen mit dem PRB-Satz basierend auf dem Wiederholungsniveau bestimmt wird und die RAR-Nachricht unter Verwendung des PRB-Satzes und des RAR-Fensters empfangen wird.

6. Basisstation (900), aufweisend:

eine Empfangseinheit (910), die dafür konfiguriert ist, eine Präambel basierend auf zumindest einem Wiederholungsniveau zu empfangen;
eine Übertragungseinheit (930), die dafür konfiguriert ist, eine Direktzugriffsantwort-, RAR-, Nachricht unter Verwendung eines Satzes physikalischer Ressourcenblöcke, PRB, der basierend auf dem Wiederholungsniveau bestimmt wird, zu übertragen.

**7.** Basisstation (900) nach Anspruch 6, wobei:
der PRB-Satz, der verwendet wird, um die RAR-Nachricht zu empfangen, mittels einer Systeminformation konfiguriert wird.

**8.** Basisstation (900) nach Anspruch 6 oder 7, wobei:
der PRB-Satz 6 aufeinanderfolgende physikalische Ressourcenblöcke enthält.

**9.** Basisstation (900) nach Anspruch 6, wobei:
die Übertragungseinheit (930) dafür konfiguriert ist, die Systeminformation zu übertragen, die Informationen enthält, welche verwendet werden, um die Anzahl an Wiederholungen für die RAR-Nachricht zu bestimmen.

**10.** Basisstation (900) nach Anspruch 6, wobei:
die Übertragungseinheit (930) die RAR-Nachricht unter Verwendung des PRB-Satzes und eines RAR-Fensters überträgt, die basierend auf dem Wiederholungsniveau bestimmt werden.

**11.** Nutzerendgerät, UE (1000), aufweisend:

eine Sendeinheit (1010), die dafür konfiguriert ist, eine Präambel basierend auf zumindest einem Wiederholungsniveau zu senden;
eine Empfangseinheit (1020), die dafür konfiguriert ist, einen Satz physikalischer Ressourcenblöcke, PRB, basierend auf dem Wiederholungsniveau zu bestimmen, wobei
die Empfangseinheit (1020) eine Direktzugriffsantwort-, RAR-, Nachricht unter Verwendung des PRB-Satzes empfängt.

**12.** Nutzerendgerät, UE (1000), nach Anspruch 11, wobei:
der PRB-Satz, der verwendet wird, um die RAR-Nachricht zu empfangen, mittels einer Systeminformation konfiguriert wird.

**13.** Nutzerendgerät (1000) nach Anspruch 11 oder 12, wobei:
der PRB-Satz 6 aufeinanderfolgende physikalische Ressourcenblöcke enthält.

**14.** Nutzerendgerät (1000) nach Anspruch 11, wobei:
die Empfangseinheit (1020) dafür konfiguriert ist, die Systeminformation zu empfangen, die Informationen enthält, welche verwendet werden, um die Anzahl an Wiederholungen für die RAR-Nachricht zu bestimmen.

**15.** Nutzerendgerät (1020) nach Anspruch 11, wobei:
die Empfangseinheit (1020) den PRB-Satz und ein RAR-Fenster basierend auf dem Wiederholungsniveau bestimmt und die RAR-Nachricht unter Verwendung des PRB-Satzes und des RAR-Fensters empfängt.

**Revendications**

**1.** Procédé mis en œuvre par une station de base (900), comprenant :

la réception d'un préambule sur la base au moins d'un niveau de répétition ;
la transmission, en utilisant un ensemble de blocs de ressource physique, PRB, déterminé sur la base du niveau de répétition, d'un message de réponse d'accès aléatoire, RAR.

**2.** Procédé selon la revendication 1, dans lequel le message RAR est transmis en utilisant l'ensemble de PRB et une fenêtre RAR déterminée sur la base du niveau de répétition.

**3.** Procédé mis en œuvre par un équipement utilisateur, UE (1000), comprenant :

l'envoi d'un préambule sur la base au moins d'un niveau de répétition ;
la détermination d'un ensemble de blocs de ressources physiques, PRB, sur la base du niveau de répétition ;
la réception d'un message de réponse d'accès aléatoire, RAR, en utilisant l'ensemble de PRB.

**4.** Procédé selon la revendication 3, dans lequel :

l'ensemble de PRB utilisé pour recevoir le message RAR est configuré par des informations de système.

5. Procédé selon la revendication 3, dans lequel :

une fenêtre RAR est déterminée conjointement à l'ensemble de PRB sur la base du niveau de répétition, et le message RAR est reçu en utilisant l'ensemble de PRB et la fenêtre RAR.

6. Station de base (900) comprenant :

une unité de réception (910) configurée pour recevoir un préambule sur la base au moins d'un niveau de répétition ;
une unité de transmission (930) configurée pour transmettre, en utilisant un ensemble de blocs de ressource physique, PRB, déterminé sur la base du niveau de répétition, un message de réponse d'accès aléatoire, RAR.

7. Station de base (900) selon la revendication 6, dans laquelle :
l'ensemble de PRB utilisé pour recevoir le message RAR est configuré par des informations de système.

8. Station de base (900) selon la revendication 6 ou 7, dans laquelle :
l'ensemble de PRB contient 6 blocs de ressource physique consécutifs.

9. Station de base (900) selon la revendication 6, dans laquelle :
l'unité de transmission (930) est configurée pour transmettre les informations de système qui contiennent des informations qui sont utilisées pour déterminer le nombre de répétitions pour le message RAR.

10. Station de base (900) selon la revendication 6, dans laquelle :
l'unité de transmission (930) transmet, en utilisant l'ensemble de PRB et une fenêtre RAR déterminée sur la base du niveau de répétition, le message RAR.

11. Equipement utilisateur, UE (1000), comprenant :

une unité d'envoi (1010) configurée pour envoyer un préambule sur la base au moins d'un niveau de répétition ;
une unité de réception (1020) configurée pour déterminer un ensemble de blocs de ressources physiques, PRB, sur la base du niveau de répétition, dans lequel
l'unité de réception (1020) reçoit un message de réponse d'accès aléatoire, RAR, en utilisant l'ensemble de PRB.

12. Equipement utilisateur (1000) selon la revendication 11, dans lequel :
l'ensemble de PRB utilisé pour recevoir le message RAR est configuré par des informations de système.

13. Equipement utilisateur (1000) selon la revendication 11 ou 12, dans lequel :
l'ensemble de PRB contient 6 blocs de ressource physique consécutifs.

14. Equipement utilisateur (1000) selon la revendication 11, dans lequel :
l'unité de réception (1020) est configurée pour recevoir les informations de système qui contiennent des informations qui sont utilisées pour déterminer le nombre de répétitions pour le message RAR.

15. Equipement utilisateur (1000) selon la revendication 11, dans lequel :
l'unité de réception (1020) détermine l'ensemble de PRB et une fenêtre RAR sur la base du niveau de répétition et reçoit le message RAR en utilisant l'ensemble de PRB et la fenêtre RAR.

10

```
        ┌─────────────┐
        │    Start    │───  S110
        └──────┬──────┘
               │
               ▼
     ┌──────────────────┐
     │  Receive a preamble │───  S120
     │  sequence sent by   │
     │  user equipment (UE)│
     └─────────┬──────────┘
               │
               ▼
     ┌──────────────────┐
     │ Determine a repetition │
     │ level according to the │───  S130
     │ preamble sequence,     │
     │ and determine a physical │
     │ resource block set      │
     └─────────┬──────────┘
               │
               ▼
     ┌──────────────────┐
     │ Send an RAR message on │
     │ the determined physical │───  S140
     │ resource block set to   │
     │ the UE                  │
     └─────────┬──────────┘
               │
               ▼
        ┌─────────────┐
        │     End     │───  S150
        └─────────────┘
```

Fig. 1

20

Start — S210

↓

Send a preamble
sequence — S220

↓

Determine, according to a
repetition level, a physical
resource block set used for
receiving an RAR message — S230

↓

Receive the RAR message
on the determined physical
resource block set — S240

↓

End — S250

Fig. 2

| System bandwidth ($N_{RB}^{DL}$) | $N_{RB}^{step}$ |
|---|---|
| | DCI Format 1C |
| 6-49 | 2 |
| 50-110 | 4 |

Fig. 3

| RAR repetition level | RB_start |
|---|---|
| 0 | 0 |
| 1 | 2 |
| 2 | 4 |
| 3 | 1 |

Fig. 4

Fig. 5

| RAR repetition level | L_CRBs |
|:---:|:---:|
| 0 | 2 |
| 1 | 3 |
| 2 | 4 |
| 3 | 6 |

Fig. 6

| Size of RB resource set | RB_star |
|:---:|:---:|
| 2 | 4 |
| 3 | 0 |
| 4 | 0 |
| 6 | 0 |

Fig. 7

Fig. 8

Receiving unit
910

Determining unit
920

Sending unit
930

Base station
900

Fig. 9

Sending unit
1010

Receiving unit
1020

User equipment
1000

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016119237 A


**Non-patent literature cited in the description**

- **ERICSSON.** Common control messages for MTC. *3GPP DRAFT; R1-143789 COMMON CONTROL MESSAGES FOR MTC, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 05 October 2014, vol. RAN WG1